# EUROPÄISCHE PATENTSCHRIFT

(11) **EP 3 587 069 B1**
(45) Veröffentlichungstag und Bekanntmachung des Hinweises auf die Patenterteilung: **16.12.2020**
(21) Anmeldenummer: 18180128.3
(22) Anmeldetag: 27.06.2018
(51) Int. Cl.: B29C 48/285, B29C 48/92, B29C 48/14, B29C 48/385, B29C 48/80

(54) **VORRICHTUNG UND VERFAHREN ZUM EXTRUDIEREN VON KUNSTSTOFF**
METHOD AND DEVICE FOR EXTRUDING PLASTIC
DISPOSITIF ET PROCÉDÉ D'EXTRUSION DE MATIÈRE PLASTIQUE

(43) Veröffentlichungstag der Anmeldung: 01.01.2020
(73) Patentinhaber: Starlinger & Co Gesellschaft m.b.H., 1060 Wien (AT)
(72) Erfinder: Stangl, Dominic, 2362 Biedermannsdorf (AT); Lovranich, Christian, 2564 Weissenbach an der Triesting (AT); Pechhacker, Andreas, 2571 Altenmarkt an der Triesting (AT)
(74) Vertreter: Margotti, Herwig Franz

(56) Entgegenhaltungen:
- US-A1- 2012 321 836

## Beschreibung

Die Erfindung betrifft eine Vorrichtung und ein Verfahren zum Extrudieren von Kunststoff gemäß dem Oberbegriff des Anspruchs 1 und des Anspruchs 8.

Aus der AT 507 971 A1 ist ein Kunststoff-Extruder zum Extrudieren von Kunststoffen bekannt, welcher ein Gehäuse mit einem Hohlraum umfasst, in dem eine Extruderschnecke drehbar gelagert ist. Die Extruderschnecke wird von einer Antriebseinheit angetrieben. Entlang der Extruderschnecke sind am Gehäuse Heizelemente angeordnet, mittels welchen Wärmeenergie in den Hohlraum einbringbar ist. Über eine Befülleinheit, welche an das Gehäuse in einem Einzugsbereich der Extruderschnecke angeschlossen ist, wird zerkleinerter Kunststoff in den Hohlraum zugeführt. Die Extruderschnecke transportiert bei Drehung den zerkleinerten Kunststoff in Transportrichtung entlang einer Längsachse der Extruderschnecke, wobei durch die von den Heizelementen in den Hohlraum eingebrachte Wärmeenergie der Kunststoff aufgeschmolzen wird. Der aufgeschmolzene extrudierte Kunststoff wird über eine am Ende des Hohlraums angeordnete Austragsöffnung aus dem Hohlraum abgeführt und einer weiteren Verwendung zugeführt.

Um die Eigenschaften des Kunststoffes zu verändern und/oder um Materialkosten zu sparen kann über eine Füllstoffdosiereinrichtung Füllstoff zum Kunststoff zugegeben werden. Füllstoffe sind zum Beispiel Karbonate, wie insbesondere Calciumkarbonat CaC03, Silikate, Talkum, Oxide, etc., oder auch kurze Fasern, insbesondere Glasfasern oder Carbonfasern. Die Füllstoffe werden mittels der Füllstoffdosiereinrichtung entweder als Masterbatch oder lose, beispielsweise pulverförmig oder in Form von Granulat, zum Kunststoff zugegeben, wobei die Zugabe von Füllstoff in pulverförmiger Form am kostengünstigsten ist. Die Füllstoffe werden entweder zum Kunststoff im Einzugsbereich der Extruderschnecke zugegeben, oder es wird der Kunststoff mit dem Füllstoff vermischt und bereits in einem vorvermischten Zustand zur Vorrichtung zugeführt. Nähere Informationen dazu können beispielsweise aus Dokument AT 508 100 A2 oder Dokument WO 2009/121085 A1 entnommen werden.

Bei den aus dem Stand der Technik bekannten Zugabemethoden für den pulverförmigen Füllstoff zum zerkleinerten Kunststoff hat sich aber als nachteilig erwiesen, dass es bei einem Füllstoff/Kunststoff-Verhältnis höher als 1/10 zu einer unzureichenden Durchmischung des Füllstoffs mit dem Kunststoff kommen kann, wodurch Füllstoffklumpen gebildet werden. Durch die Füllstoffklumpen entstehen aber zum einen Druckschwankungen an der Austragsöffnung des Extruders, was zu Problemen bei einer der Extrusion nachfolgenden Reinigung des extrudierten Kunststoffes führt, und zum anderen wird extrudierter Kunststoff mit ungleichmäßig verteiltem Füllstoffanteil gebildet. Dies führt insbesondere bei der Herstellung von Folien, Fasern und anderen dünnen Produkten zu Problemen, da es durch den ungleichmäßig verteilten Füllstoffanteil zu Rissen kommen kann.

US 2012/321836 A1 offenbart den Oberbegriff des Anspruchs 1.

Es ist somit die Aufgabe der vorliegenden Erfindung eine Vorrichtung und ein Verfahren bereitzustellen, mittels welchem die oben angeführten Nachteile des Standes der Technik vermieden werden und Kunststoff mit einem hohen Füllstoffanteil von hoher Qualität erzeugt werden kann.

Erfindungsgemäß wird die vorliegende Aufgabe durch eine Vorrichtung mit den Merkmalen des kennzeichnenden Teils des Anspruchs 1 und mit einem Verfahren mit den Merkmalen des kennzeichnenden Teils des Anspruchs 8 gelöst. Bevorzugte Ausgestaltungen der Erfindung sind Gegenstand der abhängigen Ansprüche.

Bei der erfindungsgemäßen Vorrichtung weist das Gehäuse eine in den Hohlraum mündende Zuführöffnung auf. Die Zuführöffnung ist in Transportrichtung vor dem Einzugsbereich oder im Einzugsbereich der Extruderschnecke angeordnet.

An die Zuführöffnung ist die Füllstoffdosiereinrichtung angeschlossen. Die Füllstoffdosiereinrichtung ist dazu ausgebildet, einen in einem Gasstrom dispergierten Füllstoff, insbesondere pulverförmigen Füllstoff, in den Hohlraum zuzuführen. Der pulverförmige Füllstoff haftet sich beim Durchtritt des Gasstroms durch den zerkleinerten Kunststoff an eine Oberfläche des noch nicht oder bereits zumindest oberflächig aufgeschmolzenen zerkleinerten Kunststoffs an. Das hat den Vorteil, dass der Füllstoff fein verteilt zum Kunststoff zugeführt wird und der Füllstoff sich somit auch bei Füllstoff/ Kunststoff-Verhältnissen höher als 1/10 fein verteilt an den zerkleinerten Kunststoff anhaftet. Dadurch wird eine sehr gleichmäßige Vermischung von Füllstoff und Kunststoff erreicht. Wird nun im weiteren Extrusionsvorgang das gebildete Gemisch aus Kunststoff und Füllstoff aufgeschmolzen, entsteht eine sehr homogene Masse und somit ein sehr hochqualitativer Kunststoff. Das Bilden von Füllstoffklumpen wird durch die feine Verteilung des Füllstoffs zuverlässig verhindert.

Vorteilhaft wird als Gas Luft oder Stickstoff verwendet.

Um das Gas möglichst restlos wieder aus dem Hohlraum zu entfernen, weist das Gehäuse vorteilhaft eine in den Hohlraum mündende Abführöffnung und die Vorrichtung vorteilhaft eine Saugeinrichtung auf, die an die Abführöffnung angeschlossen ist und ausgebildet ist, über den Gasstrom in den Hohlraum eingebrachtes Gas aus dem Hohlraum abzuführen. Die Saugeinrichtung kann beispielsweise durch einen einfachen Verdichter gebildet sein, der einen Unterdruck an der Abführöffnung erzeugt und somit das Gas aus dem Hohlraum absaugt. Vorteilhaft erfolgt die Absaugung des Gases aus dem Hohlraum in Abhängigkeit von einer Gasmenge des Gasstroms, der dem Hohlraum zugeführt wird.

Bevorzugt ist die Füllstoffdosiereinrichtung an eine Gaszufuhr angeschlossen und weist die Füllstoffdosiereinrichtung eine Füllstofffördereinrichtung auf, wobei die Gaszufuhr dazu ausgebildet ist, einen Gasstrom in den Hohlraum zu erzeugen und wobei die Füllstofffördereinrichtung den pulverförmigen Füllstoff aus einem Reservoir in den Gasstrom zuführt. Vorteilhaft ist die Gaszufuhr beispielsweise durch einen an der Füllstoffdosiereinrichtung angebrachten Luftverdichter in Form eines Gebläses gebildet, der mit geringem Energieaufwand Umgebungsluft komprimiert und somit einen Luftstrom erzeugt. Alternativ dazu ist die Gaszufuhr durch einen externen Industriekompressor gebildet, und die Füllstoffdosiereinrichtung ist über handelsübliche Pneumatik-Schläuche und Schnellkupplungen an dem Kompressor angeschlossen. Zweckmäßig ist die Füllstofffördereinrichtung durch eine Dosierschnecke oder zwei ineinander greifende Dosierschnecken - auch als Doppeldosierschnecke bezeichnet - gebildet.

Vorteilhaft weist die erfindungsgemäße Vorrichtung eine Durchsatzwaage auf, die in Transportrichtung am Ende der Extruderschnecke angeordnet ist und dazu ausgebildet ist, einen Massestrom an durch die Extruderschnecke beförderten Kunststoff und Füllstoff zu messen, wobei die Füllstoffdosiereinrichtung dazu ausgebildet, in Abhängigkeit von dem durch die Durchsatzwaage gemessenen Massestrom Füllstoff in den Hohlraum zu zuführen. Die Durchsatzwaage ist vorteilhaft an der Austragsöffnung angebracht. Hierdurch ist der Vorteil erhalten, dass eine Menge an in den Hohlraum zugeführtem Füllstoff während des Betriebs automatisch in Abhängigkeit von dem durch die Durchsatzwaage gemessenen Massestrom verändert wird, wodurch das Füllstoff/ Kunststoff-Verhältnis sehr konstant gehalten werden kann.

Vorteilhaft weist die Füllstoffdosiereinrichtung ein Gasheizelement auf, welches den Gasstrom erhitzt. Das hat den Vorteil, dass auch feuchte Füllstoffe, insbesondere feuchte pulverförmige Füllstoffe ohne vorherige Trocknung der erfindungsgemäßen Vorrichtung zugeführt werden können, da der Füllstoff durch das erhitzte Gas des Gasstroms getrocknet wird, bevor dieser in den Hohlraum eingebracht wird. Der Füllstoff lagert sich getrocknet an den Kunststoff an. Zusätzlich werden durch die Trocknung des pulverförmigen Füllstoffs etwaige durch die Feuchtigkeit während einer Lagerung des pulverförmigen Füllstoffs gebildete Füllstoffklumpen zerschlagen und fein verteilt. Bevorzugt ist das Gasheizelement so ausgebildet, dass es eine Abwärme eines Heizelements des Extruders nutzt, um den Gasstrom zu erhitzen. Hierdurch ist der Vorteil erhalten, dass Energiekosten minimiert werden können.

Eine Erhitzung des Gasstroms ist insbesondere auch bei der Verwendung von hygroskopischen Kunststoffen vorteilhaft, da diese empfindlich gegenüber Feuchtigkeit sind und trockener pulverförmiger Füllstoff besser in eine Polymermatrix des Kunststoffs eingebunden werden kann.

Weitere voreilhafte Ausführungsformen der erfindungsgemäßen Vorrichtung und des erfindungsgemäßen Verfahrens werden in weiterer Folge anhand der Figuren näher erläutert.

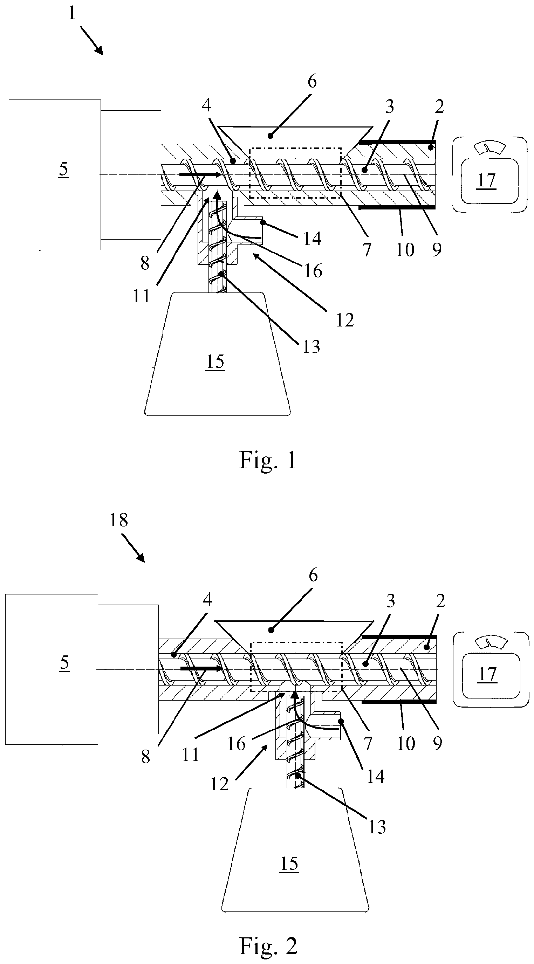

Figuren 1 bis 5 zeigen jeweils verschiedene Ausführungsformen einer erfindungsgemäßen Vorrichtung in einer schematischen Schnittansicht.

Figur 1 zeigt eine erste Ausführungsform einer erfindungsgemäßen Vorrichtung 1 in einer schematischen Schnittansicht. Die Vorrichtung 1 umfasst ein Gehäuse 2 und eine Extruderschnecke 3, wobei die Extruderschnecke 3 in einem Hohlraum 4 des Gehäuses 2 drehbar angeordnet ist. An das Gehäuse 2 schließt eine Antriebseinheit 5 an, welche ausgebildet ist, die Extruderschnecke 3 drehbar anzutreiben. Die Antriebseinheit 5 ist beispielsweise durch einen Elektromotor und ein Getriebe gebildet. An dem Gehäuse 2 ist entlang der Extruderschnecke 3 ein Heizelement 10 ausgebildet.

An das Gehäuse 2 schließt in einem Einzugsbereich 7 der Extruderschnecke 3 eine Befülleinheit 6 an. Die Befülleinheit 6 ist durch einen einfachen Trichter gebildet. In einer weiteren Ausführungsvariante besteht aber auch die Möglichkeit, dass die Befülleinheit 6 durch eine Fördereinrichtung gebildet ist. Mittels der Befülleinheit 6 kann zerkleinerter Kunststoff in den Hohlraum 4 zugeführt werden, wobei die Extruderschnecke 3 bei Drehung den zerkleinerten Kunststoff in Transportrichtung 8 entlang einer Längsachse 9 der Extruderschnecke 3 transportiert und der zerkleinerte Kunststoff durch mittels des Heizelements 10 in den Hohlraum 4 eingebrachte Wärmeenergie aufgeschmolzen wird. An einem nicht dargestellten Ende des Hohlraums 4 ist in Transportrichtung 8 eine nicht dargestellte Austragsöffnung im Gehäuse 2 ausgebildet. Durch die Austragsöffnung wird extrudierter Kunststoff aus dem Gehäuse 2 ausgetragen.

Ferner weist das Gehäuse 2 eine in den Hohlraum 4 mündende Zuführöffnung 11 auf. Die Zuführöffnung 11 ist, in Transportrichtung 8 gesehen, vor dem Einzugsbereich 7 der Extruderschnecke 3 angeordnet.

Die erfindungsgemäße Vorrichtung 1 weist ferner eine Füllstoffdosiereinrichtung 12 auf, welche an die Zuführöffnung 11 angeschlossen ist. Die Füllstoffdosiereinrichtung 12 weist eine durch eine Dosierschnecke 13 gebildete Füllstofffördereinrichtung und einen Anschluss 14 auf, welcher mit einer nicht dargestellten Gaszufuhr koppelbar ist. Vorteilhaft ist der Anschluss durch eine Schnellkupplung mit einem Druckregler verbunden. Die Gaszufuhr ist durch mit einem externen Kompressor realisiert, der mittels der Schnellkupplung und Pneumatikschläuchen an die Füllstoffdosiereinrichtung 12 angeschlossen ist. Die Dosierschnecke 13 ist durch eine nicht dargestellte zweite Antriebseinheit, beispielsweise einen Elektromotor und ein Getriebe, drehbar angetrieben.

Durch vom Kompressor zugeführter Luft wird ein Gasstrom, im Speziellen ein Luftstrom 16, durch die Füllstoffdosiereinrichtung 12 über die Zuführöffnung 11 in den Hohlraum 4 gebildet. Über die Dosierschnecke 13 wird aus einem an die Füllstoffdosiereinrichtung 12 angeschlossenen Reservoir 15 Füllstoff, insbesondere pulverförmiger Füllstoff, in den Luftstrom 16 zugeführt, wodurch der pulverförmige Füllstoff in dem Luftstrom 16 dispergiert und in den Hohlraum 4 eingebracht wird. Beim Durchtritt des Luftstroms 16 durch den Kunststoff lagert sich der pulverförmige Füllstoff fein verteilt an einer Oberfläche des Kunststoffes an.

Die in den Hohlraum 4 über die Füllstoffdosiereinrichtung 12 eingebrachte Luft wird über eine nicht dargestellte Abführöffnung aus dem Hohlraum 4 abgeführt. Vorteilhaft ist die Abführöffnung in Transportrichtung 8 vor oder nach der Zuführöffnung 11 beabstandet zur Zuführöffnung 11 im Gehäuse 2 angeordnet und weist einen Filter auf. Der Filter verhindert einen Austritt von Kunststoff oder Füllstoff aus dem Hohlraum 4.

Die Vorrichtung 1 weist weiters eine Durchsatzwaage 17 auf, die, in Transportrichtung 8 gesehen, am Ende der Extruderschnecke 3 angeordnet und dazu ausgebildet ist einen Massestrom an durch die Extruderschnecke 3 beförderten Kunststoff und Füllstoff zu messen. Die Durchsatzwaage 17 ist über nicht dargestellte Leitungen mit der Füllstoffdosiereinrichtung 12 verbunden, wobei die Füllstoffdosiereinrichtung 12 dazu ausgebildet ist, in Abhängigkeit von dem durch die Durchsatzwaage 17 gemessenen Massestrom Füllstoff in den Hohlraum 4 zuzuführen.

In einer Variante weist die Füllstoffdosiereinrichtung 12 ein Gasheizelement auf, mittels welchem der Luftstrom 16 erhitzt wird.

In einer weiteren Ausführungsform ist die Gaszufuhr durch einen Kompressor gebildet, der direkt an den Anschluss 14 angeschlossen ist.

Figur 2 zeigt eine zweite Ausführungsform einer erfindungsgemäßen Vorrichtung 18 in einer schematischen Schnittansicht. Die Vorrichtung 18 unterscheidet sich von der Vorrichtung 1 gemäß Figur 1 nur dahingehend, dass die Zuführöffnung 11 im Einzugsbereich 7 der Extruderschnecke 3 angeordnet ist.

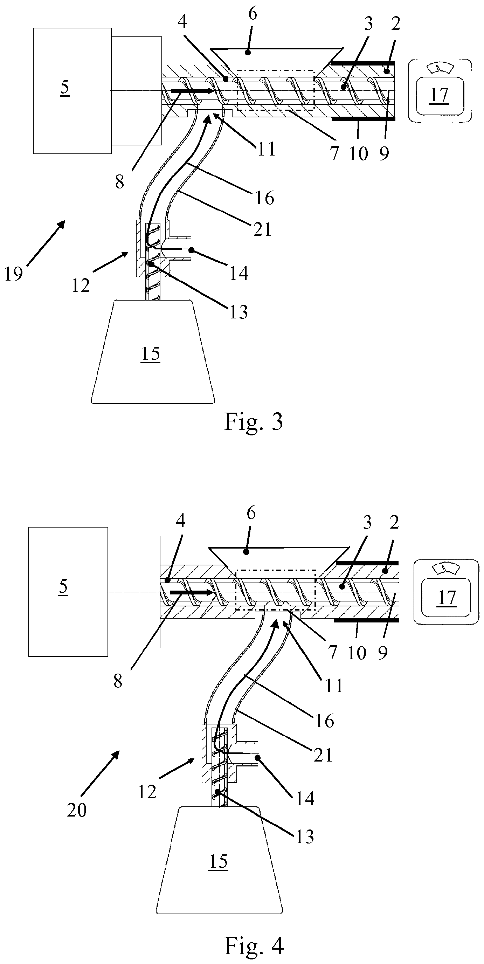

Figur 3 zeigt eine dritte Ausführungsform einer erfindungsgemäßen Vorrichtung 19 in einer schematischen Schnittansicht. Die Vorrichtung 19 unterscheidet sich von der Vorrichtung 1 gemäß Figur 1 nur dahingehend, dass die Vorrichtung 19 zusätzlich einen Schlauch 21 aufweist und die Füllstoffdosiereinrichtung 12 beabstandet zum Gehäuse 2 angeordnet ist, wobei die Füllstoffdosiereinrichtung 12 über den Schlauch 21 an die Zuführöffnung 11 angeschlossen ist. Durch Verwendung des Schlauchs 21 ist der Vorteil erhalten, dass der Füllstoff über einen längeren Zeitraum im Luftstrom 16 transportiert wird und somit der pulverförmige Füllstoff feiner im Luftstrom 16 verteilt wird. Ferner wird bei einer Vorrichtung 19 mit einer Füllstoffdosiereinrichtung 12 mit Gasheizelement durch den Schlauch 21 eine Trocknung des feuchten pulverförmigen Füllstoffs verbessert, da der pulverförmige Füllstoff durch das Vorsehen des Schlauchs 21 länger im aufgeheizten Luftstrom 16 verweilt und somit über einen längeren Zeitraum getrocknet wird.

In einer weiteren Ausführungsform ist als Alternative zum Schlauch 21 ein Rohr vorgesehen.

Figur 4 zeigt eine vierte Ausführungsform einer erfindungsgemäßen Vorrichtung 20 in einer schematischen Schnittansicht. Die Vorrichtung 20 unterscheidet sich von der Vorrichtung 19 gemäß Figur 3 nur dahingehend, dass die Zuführöffnung 11 im Einzugsbereich 7 der Extruderschnecke 3 angeordnet ist.

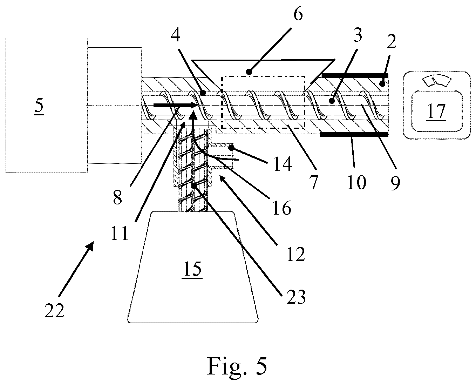

Figur 5 zeigt eine fünfte Ausführungsform einer erfindungsgemäßen Vorrichtung 22 in einer schematischen Schnittansicht. Die Vorrichtung 22 unterscheidet sich von der Vorrichtung 1 gemäß Figur 1 nur dahingehend, dass die Füllstoffdosiereinrichtung 12 statt einer einfachen Dosierschnecke eine Doppeldosierschnecke 23 aufweist.

Es sei hier noch darauf hingewiesen, dass die Vorrichtungen 1, 18, 19, 20 und 22 auch ohne Durchsatzwaage ausgebildet sein können und eine Menge an in den Hohlraum 4 zugeführtem pulverförmigen Füllstoff über eine Drehzahl der Dosierschnecke 13 bzw. Doppeldosierschnecke 23 eingestellt wird. Vorteilhaft ist dabei die Drehzahl der Dosierschnecke 13 bzw. Doppeldosierschnecke 23 von einer Drehzahl der Extruderschnecke 3 abhängig.

Weiterhin sie hier noch darauf hingewiesen, dass auch die Füllstoffdosiereinrichtung 12 der Vorrichtung 18, 19 und 20 statt mit einer einfachen Dosierschnecke mit einer Doppeldosierschnecke 23 ausgebildet sein kann.

## Patentansprüche

1. Vorrichtung (1; 18; 19; 20; 22) zum Extrudieren von Kunststoff, umfassend eine Extruderschnecke (3), ein Gehäuse (2) mit einem Hohlraum (4), in welchem die Extruderschnecke (3) drehbar angeordnet ist, eine Antriebseinheit (5) zum drehbaren Antreiben der Extruderschnecke (3), ein Heizelement (10), das entlang der Extruderschnecke (3) am Gehäuse (2) angeordnet ist, eine Befülleinheit (6), welche an das Gehäuse (2) in einem Einzugsbereich (7) der Extruderschnecke (3) angeschlossen ist und durch welche zerkleinerter Kunststoff in den Hohlraum (4) zuführbar ist, wobei die Extruderschnecke (3) bei Drehung den zerkleinerten Kunststoff in Transportrichtung (8) entlang einer Längsachse (9) der Extruderschnecke (3) transportiert und über eine Austragsöffnung, die im Gehäuse (2) ausgebildet ist, aus dem Hohlraum (4) austrägt, und eine Füllstoffdosiereinrichtung (12), wobei
das Gehäuse (2) eine in den Hohlraum (4) mündende Zuführöffnung (11) für einen Füllstoff, insbesondere pulverförmigen Füllstoff, aufweist,
**dadurch gekennzeichnet, dass** die Zuführöffnung (11), in Transportrichtung (8) gesehen, vor dem Einzugsbereich (7) oder im Einzugsbereich (7) der Extruderschnecke (3) angeordnet ist, wobei die Füllstoffdosiereinrichtung (12) an die Zuführöffnung (11) angeschlossen und dazu ausgebildet ist, den Füllstoff in einem Gasstrom (16) dispergiert in den Hohlraum (4) zuzuführen.

2. Vorrichtung (1; 18; 19; 20; 22) nach Anspruch 1, **dadurch gekennzeichnet, dass** das Gehäuse (2) eine in den Hohlraum (4) mündende Abführöffnung aufweist und dass die Vorrichtung (1; 18; 19; 20; 22) eine Saugeinrichtung aufweist, die an die Abführöffnung angeschlossen und dazu ausgebildet ist, über den Gasstrom (16) in den Hohlraum (4) eingebrachtes Gas aus dem Hohlraum (4) abzuführen.

3. Vorrichtung (1; 18; 19; 20; 22) nach Anspruch 1 oder 2, **dadurch gekennzeichnet, dass** die Vorrichtung (1; 18; 19; 20; 22) ein Reservoir (15) umfasst, und die Füllstoffdosiereinrichtung (12) einen Anschluss (14) aufweist, welcher zum Anschluss an eine, den Gasstrom (16) erzeugende, Gaszufuhr ausgebildet ist, wobei die Füllstoffdosiereinrichtung (12) eine Füllstofffördereinrichtung aufweist, und wobei die Füllstofffördereinrichtung dazu ausgebildet ist den Füllstoff aus dem Reservoir (15) in den Gasstrom (16) zuzuführen.

4. Vorrichtung (1; 18; 19; 20; 22) nach Anspruch 3, **dadurch gekennzeichnet, dass** die Füllstofffördereinrichtung eine Dosierschnecke (13) oder eine Doppeldosierschnecke (23) umfasst.

5. Vorrichtung (1; 18; 19; 20; 22) nach einem der vorherigen Ansprüche, **dadurch gekennzeichnet, dass** die Füllstoffdosiereinrichtung (12) vom Gehäuse (2) beabstandet angeordnet ist und die Vorrichtung einen Schlauch (21) oder ein Rohr zum Anschluss der Füllstoffdosiereinrichtung (12) an die Zuführöffnung (11) aufweist.

6. Vorrichtung (1; 18; 19; 20; 22) nach einem der vorherigen Ansprüche, **dadurch gekennzeichnet, dass** die Vorrichtung (1; 18; 19; 20; 22) eine Durchsatzwaage (17) aufweist, die, in Transportrichtung (8) gesehen, am Ende der Extruderschnecke (3) angeordnet und ausgebildet ist, einen Massestrom an durch die Extruderschnecke (3) befördertem Kunststoff und Füllstoff zu messen, wobei die Füllstoffdosiereinrichtung (12) dazu ausgebildet ist, in Abhängigkeit von dem durch die Durchsatzwaage (17) gemessenen Massestrom Füllstoff in den Hohlraum (4) zuzuführen.

7. Vorrichtung (1; 18; 19; 20; 22) nach einem der vorherigen Ansprüche, **dadurch gekennzeichnet, dass** die Füllstoffdosiereinrichtung (12) ein Gasheizelement aufweist, welches den Gasstrom (16) erhitzt.

8. Verfahren zum Extrudieren von Kunststoff mit einer in einem Hohlraum (4) eines Gehäuses (2) angeordneten Extruderschnecke (3), welche Extruderschnecke (3) durch eine Antriebseinheit (5) drehbar angetrieben wird, wobei ein Heizelement (10) entlang der Extruderschnecke (3) am Gehäuse (2) zum Erwärmen des Hohlraums (4) angeordnet ist, wobei über eine Befülleinheit (6), welche an das Gehäuse (2) in einem Einzugsbereich (7) der Extruderschnecke (3) angeschlossen ist, dem Hohlraum (4) zerkleinerter Kunststoff zugeführt wird, wobei bei Drehung der Extruderschnecke (3) der zerkleinerte Kunststoff in Transportrichtung (8) entlang einer Längsachse (9) der Extruderschnecke (3) transportiert wird und durch eine Austragsöffnung ausgegeben wird, **dadurch gekennzeichnet, dass** mittels einer Füllstoffdosiereinrichtung (12) über eine im Gehäuse (2) ausgebildete Zuführöffnung (11) ein in einem Gasstrom (16) dispergierter Füllstoff in den Hohlraum (4) zugeführt wird, wobei die Zufuhröffnung (11), in Transportrichtung (8) gesehen, vor dem Einzugsbereich (7) oder im Einzugsbereich (7) der Extruderschnecke (3) angeordnet ist.

9. Verfahren nach Anspruch 8, **dadurch gekennzeichnet, dass** eine Menge an in den Hohlraum (4) zugeführtem Füllstoff in Abhängigkeit von einem am Ende der Extruderschnecke (3) gemessenen Massestrom an Kunststoff und Füllstoff eingestellt wird.

10. Verfahren nach Anspruch 8 oder 9, **dadurch gekennzeichnet, dass** der Füllstoff in einem erhitzten Gasstrom (16) zum Hohlraum (4) zugeführt wird.

## Claims

1. A device (1; 18; 19; 20; 22) for extruding plastics, comprising an extruder screw (3), a housing (2) with a cavity (4) in which the extruder screw (3) is rotatably arranged, a drive unit (5) for rotatably driving the extruder screw (3), a heating element (10) arranged on the housing (2) alongside the extruder screw (3), a filling unit (6) which is connected to the housing (2) in a feed zone (7) of the extruder screw (3) and through which shredded plastic can be supplied into the cavity (4), wherein, upon rotation, the extruder screw (3) conveys the shredded plastic in the transport direction (8) along a longitudinal axis (9) of the extruder screw (3), carrying it out of the cavity (4) through a discharge port formed in the housing (2), and a filler metering device (12),
wherein
the housing (2) has a feeding port (11) for a filler, in particular a powdery filler, opening into the cavity (4),
**characterized in that**, viewed in the transport direction (8), the feeding port (11) is arranged upstream of the feed zone (7) or in the feed zone (7) of the extruder screw (3),
wherein the filler metering device (12) is connected to the feeding port (11) and is designed for supplying the filler into the cavity (4), as it is dispersed in a gas stream (16).

2. A device (1; 18; 19; 20; 22) according to claim 1, **characterized in that** the housing (2) has a discharge port opening into the cavity (4) and the device (1; 18; 19; 20; 22) comprises a suction device which is connected to the discharge port and is designed for discharging gas from the cavity (4), which has been introduced into the cavity (4) via the gas stream (16).

3. A device (1; 18; 19; 20; 22) according to claim 1 or 2, **characterized in that** the filler metering device (12) has a connection (14) to a gas supply and the filler metering device (12) comprises a filler conveying device, wherein, due to the gas supply, the gas stream (16) can be generated and wherein the filler conveying device is designed for supplying the filler from a reservoir (15) into the gas stream (16).

4. A device (1; 18; 19; 20; 22) according to claim 3, **characterized in that** the filler conveying device comprises a metering screw (13) or a twin metering screw (23).

5. A device (1; 18; 19; 20; 22) according to any of the preceding claims, **characterized in that** the filler metering device (12) is arranged at a distance from the housing (2) and the device comprises a hose (21) or a pipe for connecting the filler metering device (12) to the feeding port (11).

6. A device (1; 18; 19; 20; 22) according to any of the preceding claims, **characterized in that** the device (1; 18; 19; 20; 22) comprises a throughput scale (17), which, viewed in the transport direction (8), is arranged at the end of the extruder screw (3) and is designed for measuring a mass flow of plastic and filler conveyed through the extruder screw (3), wherein the filler metering device (12) is designed for supplying filler into the cavity (4) as a function of the mass flow measured by the throughput scale (17).

7. A device (1; 18; 19; 20; 22) according to any of the preceding claims, **characterized in that** the filler metering device (12) comprises a heating element which heats the gas stream (16).

8. A method of extruding plastics with an extruder screw (3) arranged in a cavity (4) of a housing (2), which extruder screw (3) is rotatably driven by a drive unit (5), with a heating element (10) being arranged on the housing (2) alongside the extruder screw (3) for heating the cavity (4), wherein, via a filling unit (6) connected to the housing (2) in a feed zone (7) of the extruder screw (3), shredded plastic is supplied into the cavity (4), wherein, upon rotation of the extruder screw (3), the shredded plastic is conveyed in the transport direction (8) along a longitudinal axis (9) of the extruder screw (3) and is discharged through a discharge port, **characterized in that** a filler dispersed in a gas stream (16) is supplied into the cavity (4) through a feeding port (11) formed in the housing (2) by means of a filler metering device (12).

9. A method according to claim 8, **characterized in that** an amount of filler supplied into the cavity (4) is adjusted as a function of a mass flow of plastic and filler measured at the end of the extruder screw (3).

10. A method according to claim 8 or 9, **characterized in that** the filler is supplied to the cavity (4) in a heated gas stream (16).

## Revendications

1. Dispositif (1 ; 18 ; 19 ; 20 ; 22) pour l'extrusion de matériau synthétique, comprenant une vis d'extrusion (3), un cylindre (2) présentant un espace creux (4), dans lequel la vis d'extrusion (3) est montée de façon rotative, une unité d'entraînement (5) pour l'entraînement en rotation de la vis d'extrusion (3), un élément de chauffage (10) qui est disposé le long de la vis d'extrusion (3) sur le cylindre (2), une unité de remplissage (6) qui est relié au cylindre (2) dans une zone d'introduction (7) de la vis d'extrusion (3) et par l'intermédiaire de laquelle le matériau synthétique broyé peut être introduit à l'intérieur de l'espace creux (4), la vis d'extrusion (3), lors de la rotation, transportant le matériau synthétique broyé dans le sens de transport (8) le long d'un axe longitudinal (9) de la vis d'extrusion (3) et évacuant ce dernier hors de l'espace creux (4) par l'intermédiaire d'un orifice d'évacuation qui est formé dans le cylindre (2), et un dispositif de dosage de charge (12), le cylindre (2) comportant un orifice d'introduction (11), qui débouche à l'intérieur de l'espace creux (4), pour une charge, en particulier une charge pulvérulente, **caractérisé en ce que** l'orifice d'introduction (11), vu dans le sens de transport (8), est disposé avant la zone d'introduction (7) ou dans la zone d'introduction (7) de la vis d'extrusion (3), le dispositif de dosage de charge (12) étant raccordé à l'orifice d'introduction (11) et étant conçu de manière à introduire la charge dispersée dans un flux gazeux (16) à l'intérieur de l'espace creux (4).

2. Dispositif (1 ; 18 ; 19 ; 20 ; 22) selon la revendication 1, **caractérisé en ce que** le cylindre (2) comporte un orifice d'évacuation qui débouche à l'intérieur de l'espace creux (4), et **en ce que** le dispositif (1 ; 18 ; 19 ; 20 ; 22) présente un moyen d'aspiration qui est raccordé à l'orifice d'évacuation et qui est conçu de manière à évacuer hors de l'espace creux (4) le gaz introduit à l'intérieur de l'espace creux (4) par l'intermédiaire du flux gazeux (16).

3. Dispositif (1 ; 18 ; 19 ; 20 ; 22) selon la revendication 1 ou 2, **caractérisé en ce que** le dispositif (1 ; 18 ; 19 ; 20 ; 22) comprend un réservoir (15), et le dispositif de dosage de charge (12) présente un raccord (14) qui est conçu de manière à être raccordé à une amenée de gaz qui génère le flux gazeux (16), le dispositif de dosage de charge (12) comprenant un dispositif de transport de charge, et le dispositif de transport de charge étant conçu de manière à introduire la charge dans le flux gazeux (16) à partir du réservoir (15).

4. Dispositif (1 ; 18 ; 19 ; 20 ; 22) selon la revendication 3, **caractérisé en ce que** le dispositif de transport de charge comprend une vis de dosage (13) ou une double vis de dosage (23).

5. Dispositif (1 ; 18 ; 19 ; 20 ; 22) selon l'une quelconque des revendications précédentes, **caractérisé en ce que** le dispositif de dosage de charge (12) est disposé à distance du cylindre (2), et le dispositif comprend un tuyau (21) ou un tube pour le raccordement du dispositif de dosage de charge (12) à l'orifice d'introduction (11).

6. Dispositif (1 ; 18 ; 19 ; 20 ; 22) selon l'une quelconque des revendications précédentes, **caractérisé en ce que** le dispositif (1 ; 18 ; 19 ; 20 ; 22) comprend un dispositif de mesure de débit (17), qui, vu dans le sens de transport (8), est disposé à l'extrémité de la vis d'extrusion (3) et qui est conçu de manière à mesurer un débit massique de matériau synthétique et de charge qui est transporté au moyen de la vis d'extrusion (3), le dispositif de dosage de charge (12) étant conçu de manière à introduire la charge à l'intérieur de l'espace creux (4) en fonction du débit massique qui est mesuré par le dispositif de mesure de débit (17).

7. Dispositif (1 ; 18 ; 19 ; 20 ; 22) selon l'une quelconque des revendications précédentes, **caractérisé en ce que** le dispositif de dosage de charge (12) comprend un élément de chauffage au gaz, qui chauffe le flux gazeux (16).

8. Procédé pour l'extrusion de matériau synthétique, comprenant une vis d'extrusion (3) disposée dans un espace creux (4) d'un cylindre (2), ladite vis d'extrusion (3) étant entraînée en rotation par une unité d'entraînement (5), un élément de chauffage (10) étant disposé le long de la vis d'extrusion (3) sur le cylindre (2) dans le but de chauffer l'espace creux (4), une unité de remplissage (6) étant raccordée au cylindre (2) dans une zone d'introduction (7) de la vis d'extrusion (3) et par l'intermédiaire de laquelle le matériau synthétique broyé est amené à l'espace creux (4), la vis d'extrusion (3) transportant, lors de la rotation, le matériau synthétique broyé dans le sens de transport (8) le long d'un axe longitudinal (9) de la vis d'extrusion (3) et sortant ce dernier par un orifice d'évacuation, **caractérisé en ce qu'**une charge dispersée dans un flux gazeux (16) est introduite à l'intérieur de l'espace creux (4) au moyen d'un dispositif de dosage de charge (12) par l'intermédiaire d'un orifice d'introduction (11) qui est formé dans le cylindre (2), l'orifice d'introduction (11), vu dans le sens de transport (8), étant disposé avant la zone d'introduction (7) ou dans la zone d'introduction (7) de la vis d'extrusion (3).

9. Procédé selon la revendication 8, **caractérisé en ce qu'**une quantité de charge introduite à l'intérieur de l'espace creux (4) est réglée en fonction d'un débit massique de matériau synthétique et de charge qui est mesuré à l'extrémité de la vis d'extrusion (3).

10. Procédé selon la revendication 8 ou 9, **caractérisé en ce que** la charge est amenée à l'espace creux (4) dans un flux gazeux (16) chauffé.
